# EUROPEAN PATENT APPLICATION

(11) **EP 4 560 035 A1**
(43) Date of publication of application: **28.05.2025**
(21) Application number: 23212026.1
(22) Date of filing: 24.11.2023
(51) Int. Cl.: C22B 26/12, B01J 39/02, B01J 39/10, B01J 39/14, B01J 20/06, C22B 3/24, C22B 3/42, C22B 26/10

(54) **SODIUM-SELECTIVE ABSORPTION MATERIAL**

(71) Applicant: Evonik Operations GmbH, 45128 Essen (DE)
(72) Inventor: ARNDT, Sebastian, 65462 Ginsheim Gustavsburg (DE); STADTMÜLLER, Tobias, 63500 Seligenstadt (DE); LÖFFLER, Frank, 64646 Heppenheim (DE); STENNER, Patrik, 63452 Hanau (DE); HYING, Christian, 46414 Rhede (DE); GORMAN, Elisabeth, 45721 Haltern am See (DE)
(74) Representative: Evonik Patent Association

(57) **Abstract**

The object of this invention was development of a method for the selective absorption of sodium cations in presence of foreign alkali or earth alkali cations with minimal costs and instrumental effort. The process must be scalable, and sodium traces must be sufficiently low for Li-ion battery purposes or other sodium-sensitive applications. It has been found that a certain class of calcinated mixed oxide ceramic material can solve the task. This material is named LAMP herein and defined below. Said LAMP material can be used as an absorber to remove Na⁺ selectively from a cation containing medium. LAMP stands for the stoichiometry Li_{1+x+y+z}AlₓM₂₋ₓP_{3-y}O₁₂ where 0 ≤ x ≤ 0.6 and 0 ≤ y ≤ 0.4 and 0 ≤ z ≤ 0.1 and where M is at least one metal selected from the group consisting of Ti, Si, Ge.

## Description

The invention relates to a method for the selective absorption of sodium cations (Na⁺) in presence of other alkali (Li⁺, K⁺) and/or earth alkali metal cations (Ca²⁺, Mg²⁺, etc.) using calcinated mixed oxide ceramic (CMOC) materials.

The selective removal of Na⁺ is important in applications where sodium cations disturb or where highly pure metal salts are required. For instance, high purity lithium salts as lithium hydroxide (LiOH) or Lithium carbonate (Li₂CO₃) are necessary to produce lithium ion batteries (LIB). Since natural sources of lithium are usually brines comprising a magnitude of dissolved alkali or earth alkali salts, removal of non-lithium cations from the brine is basic task when winning Lithium.

Focus of present invention is on removal of sodium cations, which can be found in many sources of metal salts. In general, sodium cations may be removed by ion-exchange resins that consist of a polymer functionalized with carboxylate or sulphonate groups. Such resins are usually made of polystyrene sulfonate and provide a large surface area where the trapping of ions occurs along with the release of other ions. The binding affinity depends on the degree of crosslinking and might decrease in the order: Ba²⁺ > Ca²⁺ > Cd²⁺ > Mg²⁺ > K⁺ > NH₄⁺ > Na⁺ > H⁺ > Li⁺. Two-valent and heavy cations generally bind (much) stronger to the resin than single valent and light cations.

Other materials for ion-exchange are aluminosilicates with the general formula MₓAlₓSi₁₋ₓO₂·yH₂O, commonly known as Zeolite. Again, microporosity offers a high surface area and absorption occurs along the release of other ions. The drawbacks are comparable to polymer-based ion-exchange resins and are obvious to persons skilled in the art.

Another method for cation separation is provided by lithium aluminate intercalates (LAI). LAI is a composite material of lithium aluminate and a polymeric binder. The working principle is based on size-excluding pores that allow the intercalation of lithium only. An example for such LAI composite is derivable from US8753594B1.

The previously described ion-exchange resins suffer from low and similar binding affinities for protons, lithium and sodium cations rendering the separation of those costly and wasteful. Depending on the striven purity, the protocol requires many purification and regeneration steps increasing the amount of brine to be discarded. The economic removal of sodium might reveal difficult or even impossible if cations with higher affinity are present in the matrix. In this case, the absorbed sodium is displaced by stronger cations and the capacity of the material decreases.

Lithium aluminate intercalates (LAI) work only for the separation of lithium cations due to size exclusion. They exhibit only a low separation efficiency between sodium and lithium cations and consume high quantities of acid for the regeneration or unloading, respectively. Furthermore, LAI work only at unnaturally high concentrations of Li⁺ and are thus impractical for the treatment of commonly available brines.

The object was therefore development of a method for the selective absorption of sodium cations in presence of foreign alkali or earth alkali cations with minimal costs and instrumental effort. The process must be scalable, and sodium traces must be sufficiently low for Li-ion battery purposes or other sodium-sensitive applications.

It has been found that a certain class of calcinated mixed oxide ceramic (CMOC) material can solve the task. This material is named LAMP herein and defined in particular below. Said LAMP material can be used as an absorber to remove Na⁺ selectively from cation containing medium.

Therefore, subject matter of current invention is a method for absorption of sodium cations from a fluid medium comprising sodium cations and at least one foreign cation selected from the group consisting of cations of the following elements: Li, K, Mg, Ca, wherein the medium is contacted with a solid absorption material, wherein said solid absorption material comprises an inorganic compound of the following stoichiometry named LAMP:

Li_{1+x+y+z}AlₓM₂₋ₓP_{3-y}O₁₂

where 0 ≤ x ≤ 0.6 and 0 ≤ y ≤ 0.4 and 0 ≤ z ≤ 0.1 and where M is at least one metal selected from the group consisting of Ti, Si, Ge.

A basic finding of present invention is that a calcinated mixed oxide ceramic having above defined LAMP stoichiometry is capable for absorbing sodium cations (Na⁺) while releasing a lithium cation (Li⁺) for the same time. Thus, during absorbing of sodium, lithium is depleted from the inorganic compound. As for the release of lithium, present absorber is preferably employed in context of lithium recovery from sources impurified by sodium compounds. The lithium released from the absorber will be enriched in the purified medium. Since the LAMP stoichiometry loses lithium during absorbing, the absorber will be spent by operation. Regeneration of the spent absorber is currently not possible.

The inventive method allows the specific, safe, simple, and complete absorption of sodium from in particular aqueous media using a variety of calcinated composite ceramic materials having a LAMP stoichiometry. The absorption was found by coincidence and is achieved by mixing, suspending, or any kind of contacting of the LAMP material with the media. The separation of the insoluble LAMP material is conducted by filtration, decantation, or any other method known by those skilled in the art. Costly and energy-intensive methods are herewith avoided, such as chromatography.

Technical benefits of the inventive absorber material are
- its specific absorption of sodium cations in complex cation (and anion) mixture;
- its superior binding affinity;
- its fast kinetics;
- its high specific capacity;
- it works at any concentration;
- it allows a simple procedure and process development;
- its stability versus highly alkaline media.

Broadly, the method can be used to prepare highly pure metal compounds. It is particularly interesting for the refinement of lithium salts that have similar affinity to common absorption or exchange materials, and which are otherwise hard to separate. The method might be even used to establish an inverse lithium extraction protocol in which Li brines are cleaned from all other metals. The current method may advantage lower operative costs than sodium removal by ion-exchange resins, Zeolite, or further competing processes due to low generation of waste and simple processing.

It has been found that present LAMP material can absorb sodium in absence of any electrical field. This is surprising as absorption and release of cations by ceramic compounds has been observed often in electrochemical processes: In particular, it is known that so called LiSICon or NaSICon materials are capable to absorb and resorb Li⁺ cation or Na⁺ respectively under influence of an electric potential. LiSICon stands for Lithium Super Ionic Conductor, NaSICon for Sodium Super Ionic Conductor. Both terms relate each to a class of (glass)ceramics usable as a solid state lithium or sodium ion conductor. LiSICon refers to some material having a LAMP stoichiometry. In particular, some phosphate-type LiSICons comply with above defined formula for LAMP. However, not every LiSICon material fulfils the requirement of the LAMP stoichiometry either. For instance, oxide type LiSICons fail to show the inventively used absorption effect.

The effect of transportation of Li or Na ions in LiSICon or NaSICon material under influence of an electrical field has been explained for instance by
Palakkathodi Kammampata et al.: Cruising in ceramics-discovering new structures for all-solid-state batteries-fundamentals, materials, and performances. Ionics 24, 639-660 (2018) DOI: 10.1007/s11581-017-2372-7
   and by
Yedukondalu Meesala et al.: Recent Advancements in Li-Ion Conductors for All-Solid-State Li-Ion Batteries. ACS Energy Lett. 2017, 2, 12, 2734-2751 DOI: 10.1021/acsenergylett.7b00849

The fact that the ionic conductivity of ceramics like NaSICon or LiSICon occurs in electrical fields only, surprised present inventors when noting that LAMP type ceramics actually do absorb Na ions and resorb Li ions independently from presence of an electric field. Thus, it is possible to run present sodium cation absorbing method without applying a dedicated electrical field to the absorber. In particular, there is no need to place the LAMP type absorber in an electrochemical cell. However, the presence of an electrical field does impair absorbing performance as long as the sodium cations are not retained from the absorber by the field. Therefore, it is possible to perform present absorbing method in combination with electrochemical processes for lithium separation, in particular in combination with a membrane based electrodialysis of lithium. The electrical field required to run electrodialysis may or may not affect inventive sodium absorption.

Thus, according to a certain embodiment, the method is performed in an electrical field having a potential between 0 Volt and 0.1 Volt. A electric potential in this range means that an electrical field is quite weak or almost absent as it is not dedicated to the absorption. A weak field may rather be a side effect of an adjacent electrochemical cell performing a potential-driven process like an electrodialysis or an electrolysis or combinations thereof.

Since the presence of a strong electrical field does not influence the absorption properties of the LAMP ceramic, it is basically possible to place the absorber inside an electrochemical cell. In this embodiment, the method is performed in an electrical field having a potential above 0.1 Volt. The potential of the electrical field may be in the range of cell voltages frequently applied in electrochemical processes. For instance, the potential may range from 1 Volt to 100 Volt. In case of running the absorber within an electrochemical cell, its polarity should be chosen not to hinder Li cations contacting the absorber: Thus, cell's cathode should be placed beyond the absorber. Consequently, the sodium cations (Na⁺) moving along the field towards the cathode are forced to contact the absorber while the Li cations (Li⁺) released from the LAMP material are drawn off.

According to a preferred embodiment, the solid absorption material (LAMP) is of particulate form. The particulate form allows to design an absorbing bed of LAMP material. The bed is flooded by the fluid medium. This allows intensive contact between the medium bearing the sodium cations and the absorber. The particulate form of the solid absorption material enhances the contact surface and therefore absorbing efficiency. Preferably, the solid absorption material is in form of a powder. The size of the particles of the powder shall not be smaller than 100 nm and shall not be larger than 100 µm (10⁻⁷ m to 10⁻⁴ m). The larger particles in the magnitude of µm may be agglomerates (secondary particles) of smaller particles in the magnitude of nm (primary particles). Such particles can be obtained by flame pyrolysis. Powders obtained by solid state reaction do usually not comprise such agglomerates. It consists substantially of primary particles in the range from 100 nm to 10 µm (10⁻⁷ m to 10⁻⁵ m).

Alternatively, the particulate solid absorption material may have a specific surface area in the range from 1 m²/g bis 20 m²/g. The specific surface area is to be measured with N₂ absorption according to the method developed by Brunauer-Emmett-Teller (so called BET surface area):
Brunauer, S., Emmett, P. H., Teller, E.: Adsorption of Gases in Multimolecular Layers. Journal of the American Chemical Society. Vol. 60, Issue 2, 1938, Pages 309-319 DOI: 10.1021/ja01269a023.

The fluid medium bearing the Na⁺ cations may be liquid, gaseous, a multiphase mixture of a liquid and a gas or a supercritical fluid or a plasma. In the easiest way, the medium is provided as an aqueous liquid. In particular, the medium may be a solution of at least one sodium salt in water. Beside the sodium cations (dissolved from the Na-salt) the medium contains other cations than sodium, namely foreign cations selected from Lithium, Potassium, Magnesium or Calcium. The latter may be the cations of respective Li-, K-, Mg-, or Ca-salts dissolved in the aqueous medium.

If the medium is provided as a aqueous liquid, it is preferred to provide the absorption material in particulate form as a bed. Said bed is located in a vessel and flooded with the aqueous liquid medium. This configuration allows intensive contact between the medium and the absorber and a simple process design using conventional equipment supplied with LAMP-type particulate solid absorption material. A benefit of using the absorber in form of a bed is that no additional separation step needs to be performed: The medium is just supplied to the vessel and withdrawn therefrom. The bed retains in place, while the medium is removed out of the vessel.

If the medium is chosen as an aqueous liquid, the temperature T of the aqueous liquid medium shall be between 10°C and 50°C or between 20°C and 30°C when contacting the absorber. The *pH* value of the liquid medium shall be between 4 and 13 or between 5 and 12. The *pH* values is to be measured with a glass electrode at the temperature *T* of the medium at absorber contact. The glass electrode is to be calibrated with a conventional test solution having a defined *pH* value. Preferably, the aqueous medium is at ambient temperature between 20°C and 30°C and has a weak acidic to strong basic character with a *pH* between 5 and 12. The inorganic LAMP material resists in such environment. However, due to the absorption effect lithium cations (Li⁺) are released from said inorganic material. Thus, the solid absorbent material loses its initial LAMP stoichiometry during operation, but it still keeps solid. Therefore, separation of the fluid medium from the solid absorber is easy even in spent state of the absorber. Separation can be accomplished with conventional technologies like filtration or decantation.

The acronym LAMP used for the stoichiometry dealt herein obtained its name from contained compounds Lithium, Aluminium, Metal and Phosphate. Metal is a placeholder for Titanium, Silicon, Germanium or mixtures thereof.

The solid inorganic material used herein as an absorber can be divided into two basic branches of LAMP stoichiometry: In the first branch, M stands for Titanium and/or Silicon. In the second one, M stands for Germanium and/or Titanium.

Within the first branch, a solid inorganic material called LATP is an example for a LAMP stoichiometry. In LATP, M is defined being Titanium. Thus, the formula of LATP is the following:

Li_{1+x+z}AlₓTi₂₋ₓ(PO₄)₃

where 0.1 ≤ x ≤ 0.3 and 0 ≤ z ≤ 0.1.

According to a preferred embodiment, within LATP x is selected to be 0.3 and z is defined 0.

Thus, this LATP is of the following formula:

Li_{1.3}Al_{0.3}Ti_{1.7}(PO₄)₃

According to an preferred embodiment, LATP with excess Lithium is used. The latter has the following formula:

Li_{1.4}Al_{0.3}Ti_{1.7}(PO₄)₃

Thus, for excess Lithium LATP x = 0.3 and z=0.1. Thanks to the surplus of Lithium, this material has an enhanced capacity to replace sodium by lithium.

Yet another embodiment of a LAMP stoichiometry within the first branch is LATSP:

Li_{1+x+y}AlₓTi₂₋ₓSi_{y}P_{3-y}O₁₂

where 0.1 ≤ x ≤ 0.6 and 0.15 ≤ y ≤ 0.4

In LATSP, the Metal M is a combination of Titanium und Silicon.

A preferred LATSP has the following composition:

Li_{1.75}Al_{0.6}Ti_{1.4}Si_{0.15}P_{2.85}O₁₂

This means that x is selected 0.6 and y is selected 0.15.

In its second branch, LAMP materials are characterized by M being Germanium or a combination of Germanium and Titanium.

According to a first embodiment of the second branch, the inorganic material is a compound of the following stoichiometry (LAGP):

Li₁₊ₓAlₓGe₂₋ₓ(PO₄)₃

Within LAGP, the metal is Germanium. x may be 0 or 0.2 or 0.4 or 0.5. Therefore, four flavors of LAGP can be used:

LiGe₂(PO₄)₃

Li_{1.2}Al_{0.2}Ge_{1.8}(PO₄)₃

Li_{1.4}Al_{0.4}Ge_{1.6}(PO₄)₃

Li_{1.5}Al_{0.5}Ge_{1.5}(PO₄)₃

Yet another LAMP stoichiometry of the second branch is LAGTP. In LAGTP, M is a combination of Ge and Ti.

Accordingly, the inorganic material is a compound of the following stoichiometry called LAGTP:

Li₁₊ₓAlₓGe_{y}Ti_{2-x-y}(PO₄)₃

where 0 ≤ x ≤ 0.5 and where 0.1 ≤ y ≤ 0.3

A preferred embodiment of LAGTP is defined by x=0.45 and y=0.2. Thus, the stoichiometry reads:

Li_{1.45}Al_{0.45}Ge_{0.2}Ti_{1.35}(PO₄)₃

Finally, it has been discovered that an additional LAMP type material can be used for the present absorption method, namely plain lithium titanium phosphate:

LiTi₂(PO₄)₃.

Following the nomenclature of the LAMP materials discussed above, lithium titanium phosphate should be named LTP. As it contains no aluminum, it is neither part of the first branch, nor of the second one.

At a glance, disclosed stoichiometries of inorganic compounds being usable for absorbing sodium cations according to the invention are compiled in Table 1.

**Table 1: Stoichiometry of inorganic compounds**

| **Formula** | **M** | **x** | **y** | **z** | **Name** | **Branch** |
|---|---|---|---|---|---|---|
| Li_{1+x+y+z}AlₓM₂₋ₓP_{3-y}O₁₂ | Ti, Si, Ge | 0 = x = 0.6 | 0 = y = 0.4 | 0 = z = 0.1 | LAMP | root |
| LiTi₂(PO₄)₃ | Ti | x=0 | y=0 | z=0 | LTP | n.a. |
| Li_{1+x+z}AlₓTi₂₋ₓ(PO₄)₃ | Ti | 0.1 = x = 0.3 | y=0 | 0 = z = 0.1 | LATP | first |
| Li_{1.3}Al_{0.3}Ti_{1.7}(PO₄)₃ | Ti | x=0.3 | y=0 | z=0 | LATP | first |
| Li_{1.4}Al_{0.3}Ti_{1.7}(PO₄)₃ | Ti | x=0.3 | y=0 | z=0.1 | LATP | first |
| Li_{1+x+y}AlₓTi₂₋ₓSi_{y}P_{3-y}O₁₂ | Ti, Si | 0.1 = x = 0.6 | 0.15 = y = 0.4 | z=0 | LATSP | first |
| Li_{1.75}Al_{0.6}Ti_{1.4}Si_{0.15}P_{2.85}O₁₂ | Ti, Si | x=0.6 | y=0.15 | z=0 | LATSP | first |
| LiGe₂(PO₄)₃ | Ge | x=0 | y=0 | z=0 | LAGP | second |
| Li_{1.2}Al_{0.2}Ge_{1.8}(PO₄)₃ | Ge | x=0.2 | y=0 | z=0 | LAGP | second |
| Li_{1.4}Al_{0.4}Ge_{1.6}(PO₄)₃ | Ge | x=0.4 | y=0 | z=0 | LAGP | second |
| Li_{1.5}Al_{0.5}Ge_{1.5}(PO₄)₃ | Ge | x=0.5 | y=0 | z=0 | LAGP | second |
| Li₁₊ₓAlₓGe_{y}Ti_{2-x-y}(PO₄)₃ | Ge, Ti | 0 = x = 0.5 | 0.1 = y = 0.3 | z=0 | LAGTP | second |
| Li_{1.45}Al_{0.45}Ge_{0.2}Ti_{1.35}(PO₄)₃ | Ge, Ti | x=0.45 | y=0.2 | z=0 | LAGTP | second |

Basically, the above mentioned LAMP materials are prepared by mixing and homogenization of the component chemicals in a ball mill. In the following step, the powder is calcinated overnight in an oven, and the resulting solid foam is crushed and sieved. It can also be used as a powder.

It has been discovered, that mentioned calcination results in enhanced absorption properties. In calcination, a precursor material is subjected to elevated temperature in the range from 700°C to 1200°C in presence of oxygen. The pressure can be atmospheric.

The foreign cations being present in the medium beside the sodium may be selected group consisting of Li⁺, K⁺, Mg²⁺, Ca²⁺. Such cations are to be expected to result from salts of Lithium, Potassium, Magnesium or Calcium, when dissolved in the medium. For example, the medium may be a natural brine containing water and such salts. Alternatively, the medium may be obtained in the course of recycling spent Lithium Ion Batteries (LIB) or of producing fresh LIB.

### Examples

Present invention will become more apparent in light of following examples accompanied by the figures. The latter show:
- Fig. 1:: General experimental setup for sodium absorption in batch. PE = poly(ethylene), CMOC = calcinated mixed oxide ceramic, PTFE = poly(tetrafluoroethylene);
- Fig. 2:: IEC Calibration lines for sodium (top) and lithium (bottom);
- Fig. 3:: Concentrations plotted versus time for calcinated LATSP_F0198-08 material. Initial experiment (top) and reproduction experiment (bottom);
- Fig. 4:: Concentrations plotted versus time for sintered LICGC^{®} disk;
- Fig. 5:: Na content of solutions of various concentrations before and after treatment with sintered LICGC^{®} disk for one month;
- Fig. 6:: Concentrations plotted versus time for calcinated LICGC^{®} powder;
- Fig. 7:: Concentrations plotted versus time for calcinated LAGP powders SSR1 (top), SSR2 (middle), and SSR16_v7_k (bottom);
- Fig. 8:: Concentrations plotted versus time for calcinated LAGTP powders NFO (top), and SSR6 (bottom);
- Fig. 9:: Concentrations plotted versus time for calcinated LATP powder;
- Fig. 10:: Concentrations plotted versus time for calcinated "LATP_blau" powder;
- Fig. 11:: Concentrations plotted versus time for calcinated "LATP_SSR_5" powder;
- Fig. 12:: Concentrations plotted versus time for calcinated "LATP_SSR_7" powder;
- Fig. 13:: Concentrations plotted versus time for calcinated "LATP_SSR_8" powder;
- Fig. 14:: Sodium concentrations plotted versus time for lithium loaded Lewatit resin;
- Fig. 15:: R&I scheme for continuous treatment using a cartridge filled with CMOC;
- Fig. 16:: Sodium concentrations plotted versus time for LICGC^{®} Ohara cartridge. Conditions: LICGC grains (21.21 g), C(LiOH/NaOH) = 1.0/0.1 M/M, fr = 21.5 mL/min, T = 25 °C, pH 14;
- Fig. 17:: R&I scheme for continuous treatment using a cartridge filled with LATP (a) - (c);
- Fig. 18:: Sodium and lithium concentrations plotted versus time for medium-sized LATP granules (b);
- Fig. 19:: Sodium and lithium concentrations plotted versus time for medium-sized LATP granules (b);
- Fig. 20:: Sodium and lithium concentrations plotted versus time for medium-sized LATP granules (b);
- Fig. 21:: Sodium concentrations plotted versus time in dependence of the used masses of LATP material (b) in [g];
- Fig. 22:: Sodium and lithium concentrations plotted versus time for large-sized LATP granules (c);
- Fig. 23:: Sodium and lithium concentrations plotted versus time for small-sized LATP granules (a);
- Fig. 24:: Sodium concentrations plotted versus time in dependence of grain size of LATP material;
- Fig. 25:: Sodium and lithium concentrations plotted versus time for the medium-sized LATP material (b);
- Fig. 26:: Sodium concentrations plotted versus time for LATP material (c). Disruptions constitute the exchange of the treated with a new solution;
- Fig. 27:: Absorbed sodium masses plotted versus time for LATP material (c). Disruptions constitute the exchange of the treated with a new solution;
- Fig. 28:: Conditions: C(LiOH) = 1.0 M, C(NaOH) = 0.1 M, m(H-Lewatit) = 300 g, cartridge), Capacity = 8.9 mg Na/g H-Lewatit, T = 25 °C, pH 14;
- Fig. 29:: Conditions: C(LiOH) = 1.0 M, C(NaOH) = 0.1 M, m(Li-Lewatit) = 300 g, in cartridge, capacity = 8.9 mg Na/g Lewatit, T = 25 °C, pH 14;
- Fig. 30:: Metal cation concentrations plotted versus time for the treatment with largesized LATP material (c);
- Fig. 31:: Metal cation concentrations plotted versus time for the treatment with Lewatit K2621;
- Fig. 32:: Li⁺ concentration versus time plot for the electrodialysis experiment;
- Fig. 33:: Ion-exchange chromatogram of the catholyte solution for the determination of purity. The catholyte solution was injected with a dilution of 1/10;
- Fig. 34:: Metal cation concentrations plotted versus time for the treatment with largesized LATP material (c);
- Fig. 35:: Metal cation concentrations plotted versus time for the treatment with Lewatit K2621;
- Fig. 36:: Metal cation concentrations plotted versus time for the treatment with Lewatit K2621;
- Fig. 37:: Li⁺ concentration versus time plot for the electrodialysis experiment;
- Fig. 38:: Li⁺ concentration versus time plot for the corresponding electrodialysis experiment (bottom: Li₂SO₄ , top: LiCI);
- Fig. 39:: XRD overlay of spectra of LICGC^{®} material before absorption of sodium;
- Fig. 40:: XRD overlay of spectra of LICGC^{®} material after absorption of sodium.

### Example 1: Batch experiments

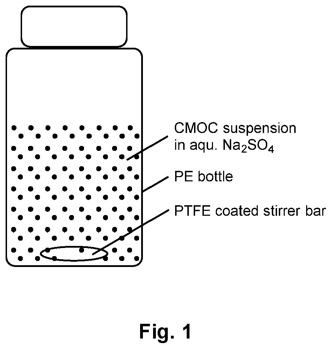

A certain amount of the corresponding calcinated mixed oxide ceramic (CMOC) material was suspended in an aqueous solution of sodium sulfate (64.0 mM, 100 mL) in a poly(ethylene) bottle and was kept stirring under air and at room temperature (Fig. 1). Samples were taken frequently and were analyzed by ion-exchange chromatography (IEC) for the lithium and sodium content. The IEC samples were filtered before the measurement using a syringe filter of type Chromafil^{®}Xtra MV-20/25, pore size 0.20 µm, for aqueous or polar media. Glassware was avoided due to the dissolution of sodium cations from the glass at high pH values.

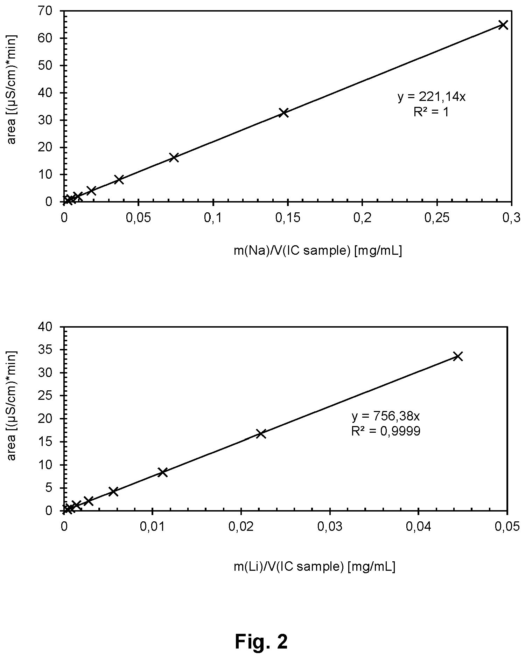

Before the investigation, the IEC machine (Metrohm IC 930 Compact, C Supp C6 250/4.0, conductivity detector) was referenced and calibrated externally for sodium and lithium using the recommended standard eluent (1.7 mM HNO₃, 1.7 mM dipicolinic acid) (Fig. 2).

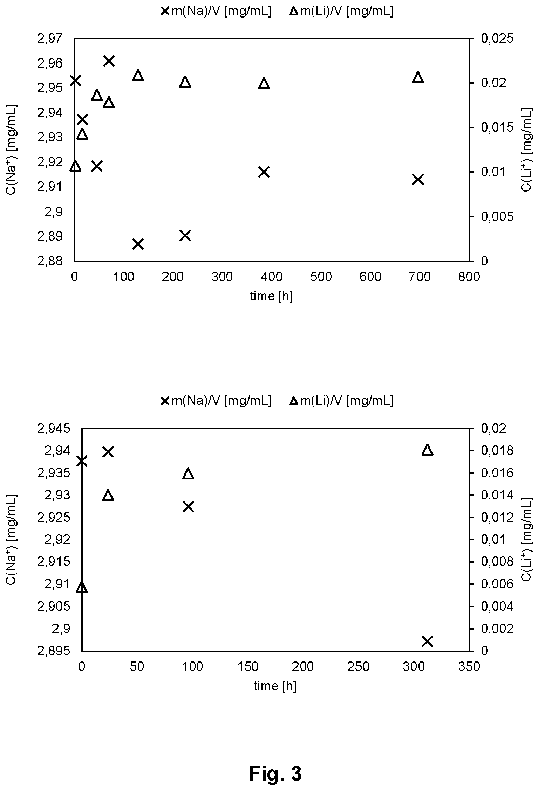

The CMOC materials were tested according to the procedure above. The IEC analysis revealed an instant absorption of sodium of 2(±3) mg for 2.00 g of calcinated LATSP_FO196-08 material (Fig. 3, top). A reproduction experiment resulted in an absorption of 1.5(±1.7) mg of sodium (Fig. 3, bottom).

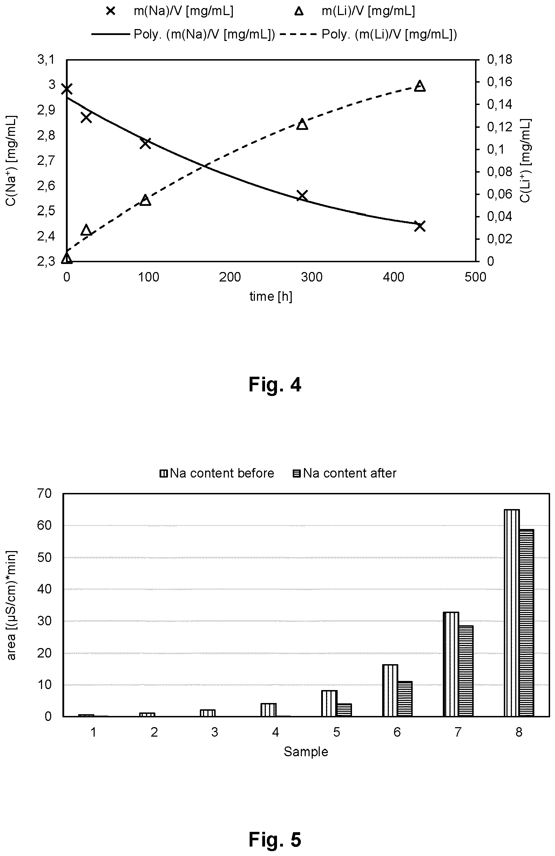

Lithium-ion conducting glass-ceramics (LICGC^{®}) was investigated next. It is a commercial material from Ohara Corporation. LICGC^{®} sintered disks (2.20 g, thickness = 1 mm, diameter = 25 mm) absorbed up to 50 mg of sodium cations over a time of 432 h (Fig.4). The longer reaction time compared to powder indicate a reaction mechanism at the surface of the material. The disk depleted entirely during this process. The sodium absorption by LICGC^{®} disks was also investigated for various concentrations of sodium sulfate. The amount of absorption of 2-28 mg sodium within 1 month was determined independent from the sodium concentrations (Fig. 5).

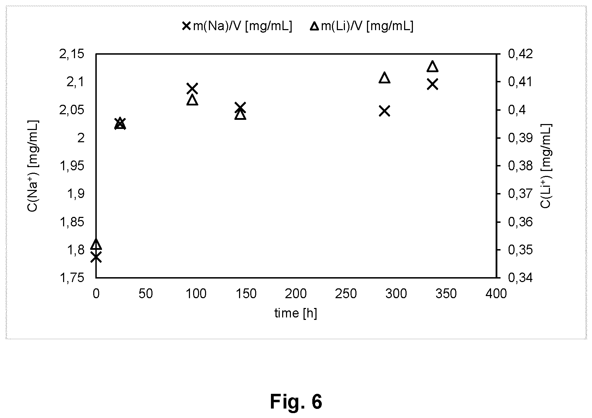

An instant absorption of sodium cations was observed with calcinated LICGC^{®} powder, presumably due to a higher surface area. The total amount of absorbed sodium was determined to 92(±11) mg per 2.00 g of material by IEC analysis (Fig.6). The concentration of sodium remained constant after 100 h of stirring.

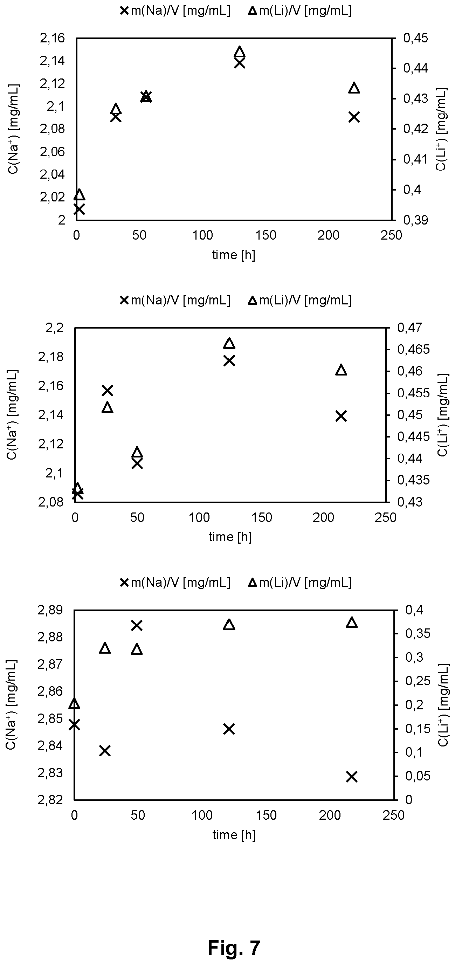

For calcinated LAGP powders, an instant absorption of 81(±3) mg of sodium was determined for the SSR1 material by IEC analysis (Fig.7, top). SSR stands for material produced in a solid-state reaction by reactive grinding with a DISPERMAT^{®}. 85(±4) mg of sodium absorption was found for SSR2 material (Fig.7, middle). 9(±2) mg of sodium absorption was found for SSR16_v7_k material (Fig.7, bottom). Again, 2.00 g of material was used for each experiment. The SSR1 and 2 material both had a particle size of 6 µm-10 µm (median size D₅₀). The particle size of the SSR16_V7 material was smaller.

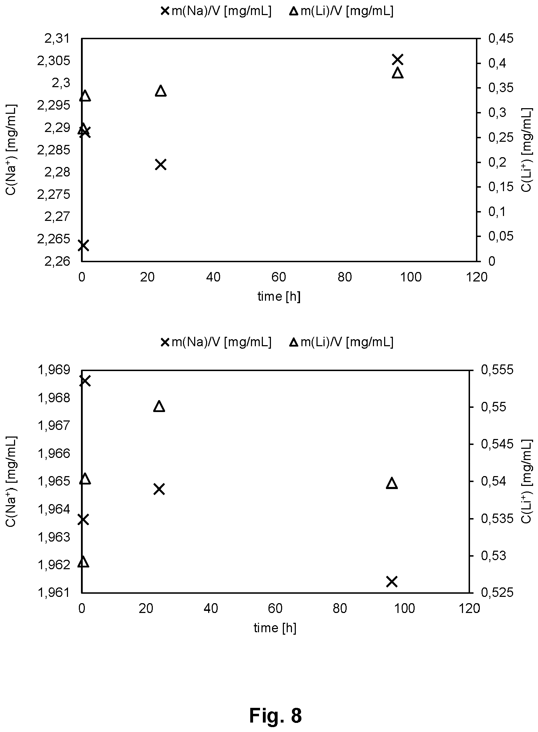

LAGTP_NFO powder instantly absorbed 66(±1) mg per 2.00 g of material as determined by IEC analytics (Fig. 8, top). LAGTP_SSR6 powder instantly absorbed 98(±0.2) mg per 2.00 g of material as determined by IEC analytics (Fig. 8, bottom). The NFO material was produced by flame pyrolysis. The NFO material provided a primary particle size of 200 nm, which agglomerate to 10 µm-100 µm (d50).

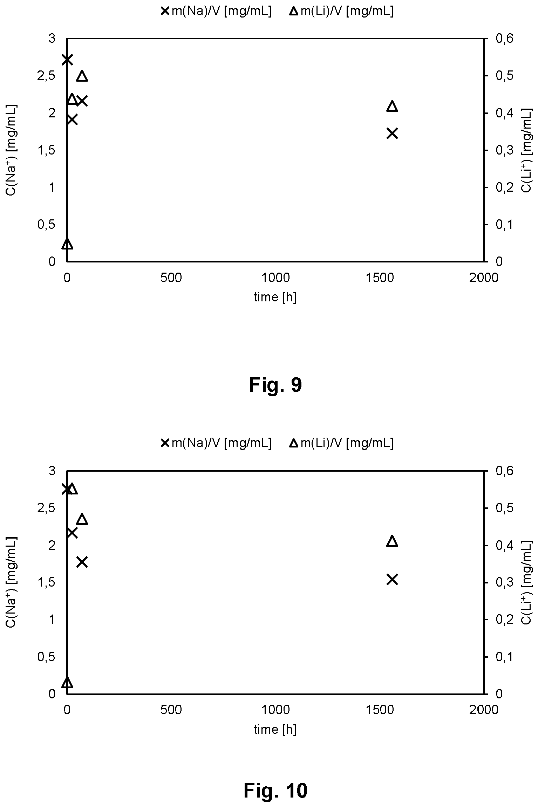

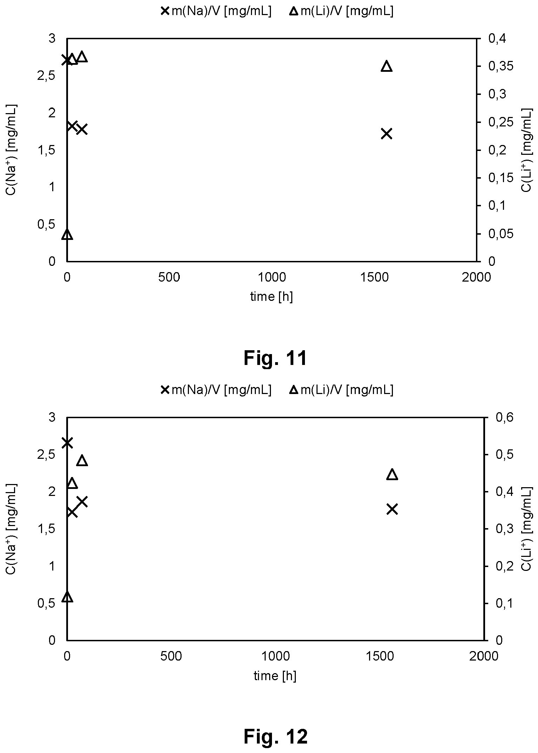

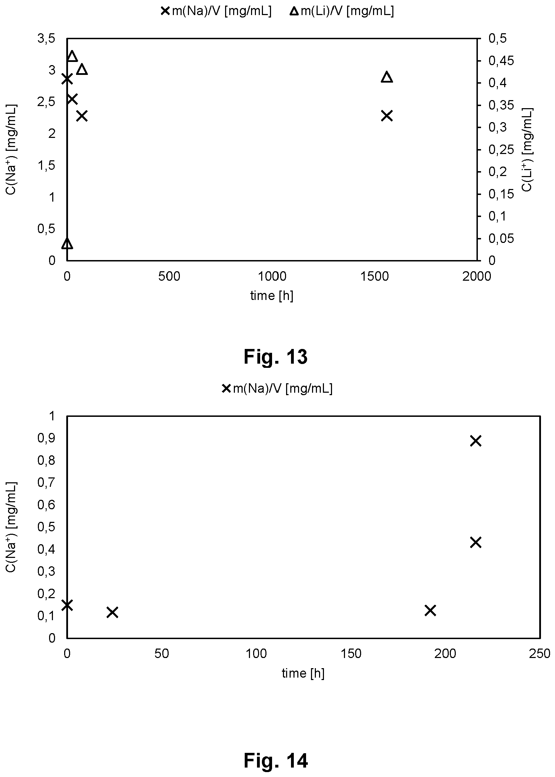

Various LATP powders were investigated according to general procedure. LATP (2.00 g) absorbed 81(±37) mg of sodium (Fig. 9). Most of the sodium was absorbed instantly, but increased slightly over the time of 1500 h. A similar absorption behavior was found for other sample materials "LATP_blau" [88(±46) mg], "LATP_SSR_5" [93(±41) mg], and "LATP_SSR_7" [93(±38) mg] (Fig. 10 to 12). Only "LATP_SSR_8" absorbed less sodium [44(±24) mg] (Fig. 13).

The results above were compared to the absorption of sodium with a lithium loaded Lewatit resin from Fa. LANXESS that is Lewatit MonoPlus S108H (Fig.14). An instant absorption of 281(±1) mg from initially 294 mg of sodium was determined using 93.7 g of material, which was unchanged after 190 h. Additional Na₂SO₄ (2 x 6.40 mmol) was added to the solution, whereupon a total absorption of 545 mg and 793 mg Na was observed subsequently. The specific capacity limit for sodium was reached. Accordingly, the specific capacity for sodium amounts to 8.5 mg Na/g Lewatit which is significantly less than for the CMOC materials.

### Example 2: Flow experiments with a cartridge

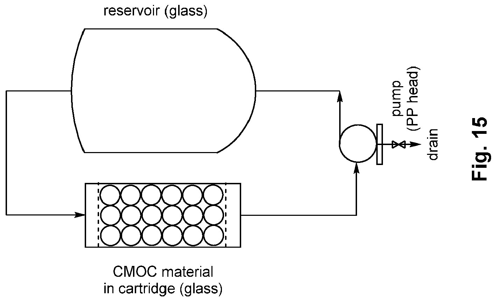

The method was deployed to the continuous absorption using a CMOC-filled cartridge. If necessary, CMOC material was crushed to a suitable grain size and filled into the cartridge (length = 16 cm; diameter = 1.5 cm). The cartridge was connected to a centrifugal pump from Fa. Verder (fr1 bar = 10 L/min; determined flow rate fr = 21.5 mL/min), and a reservoir (Fig.15). The setup was operated in cycling mode. The cation concentration was monitored using IC analytics as described in Example 1.

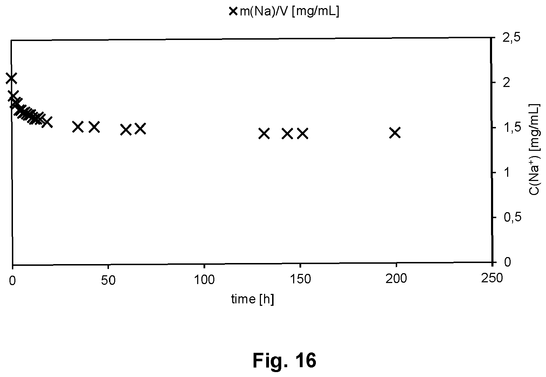

In one experiment, LICGC^{®} discs (produced with material obtained from Ohara, 21.21 g) were crushed and filled into a glass cartridge (L = 16 cm; diameter = 1.5 cm). A mixture of LiOH (1.0 M) and NaOH (0.1 M) with the volume of 1 L was treated for several days. The sodium absorption was fastest at the beginning of the experiment and reached its plateau after 42 h (Fig.16). In total, 633 mg of Na+ were absorbed after 132 h yielding a specific capacity of 30 mg Na/g LICGC^{®} grains.

Based on our previous result, tests were performed with our homemade LATP material Li_{1.3}Ti_{1.7}Al_{0.3}(PO₄)₃. It was produced by milling and mixing the chemicals Airoxide^{®} Alu 130, Airoxide^{®} TiO₂ P90, Ammonium hydrogen phosphate, and Li₂CO₃ in a ball mill at 150 rpm for 5 min. The resulting powder was heated at 850 °C for 5 h in an oven, and the chunks were crushed in a jaw crusher. Granules in three different grain size fractions (a: >0.15 mm, b: 1.25-4.5 mm, c: <7.45 mm) were separated by sieving.

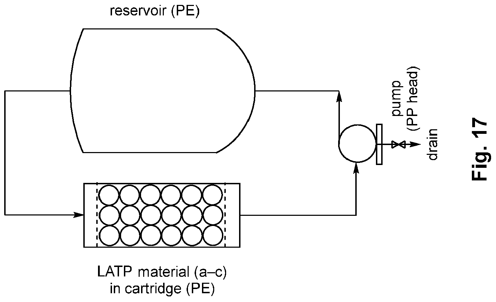

The different LATP granules (a-c) were filled into a PE cartridge (length = 13 cm; diameter = 2 cm), that was connected to an apparatus according to the setup above, but with plastic materials (PE or PP) instead of glass due to the leaching of sodium cations (Fig. 17). A mixture of LiOH (1.0 M) and NaOH (250 ppm) with the volume of 0.6 L was treated with each grain-size fraction and with various amounts of LATP material b of 2.5 g, 5.33 g, and 9.98 g.

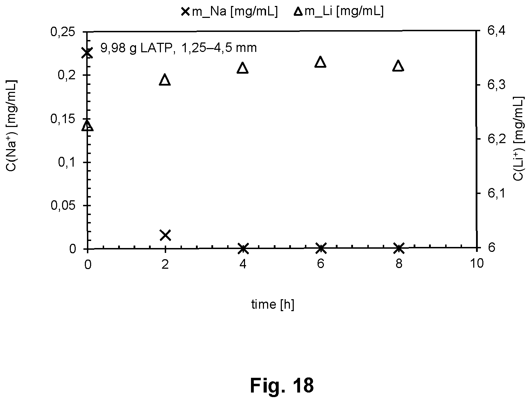

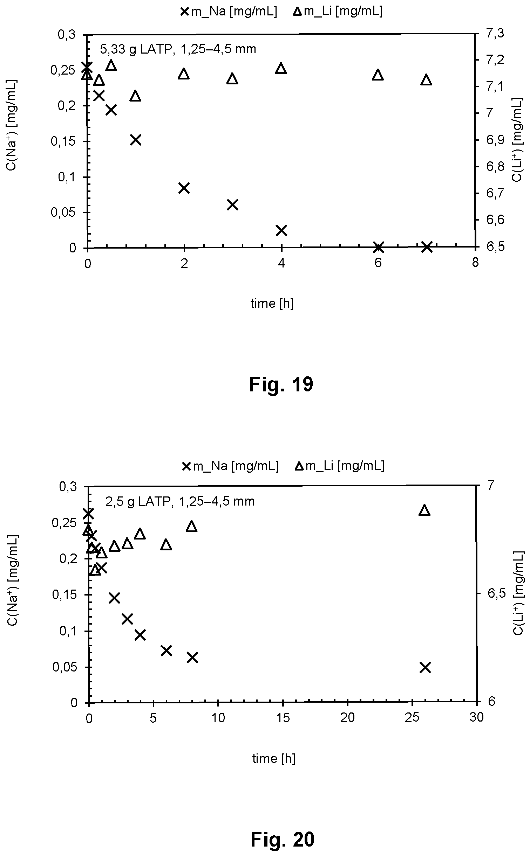

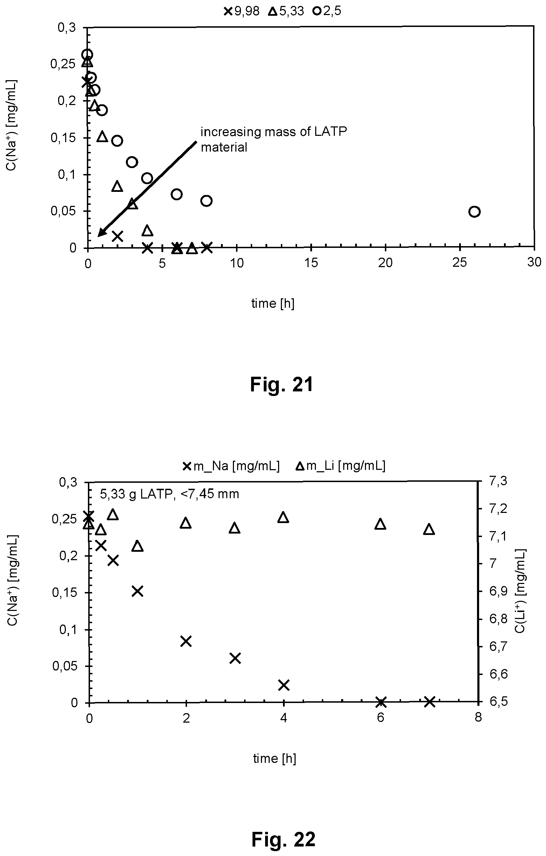

The experimental row on deployed LATP amounts revealed a faster absorption of sodium cations at higher amounts of the absorber material (Fig. 18 - 20, overlay in Fig. 21). This result is to be explained by surface effects.

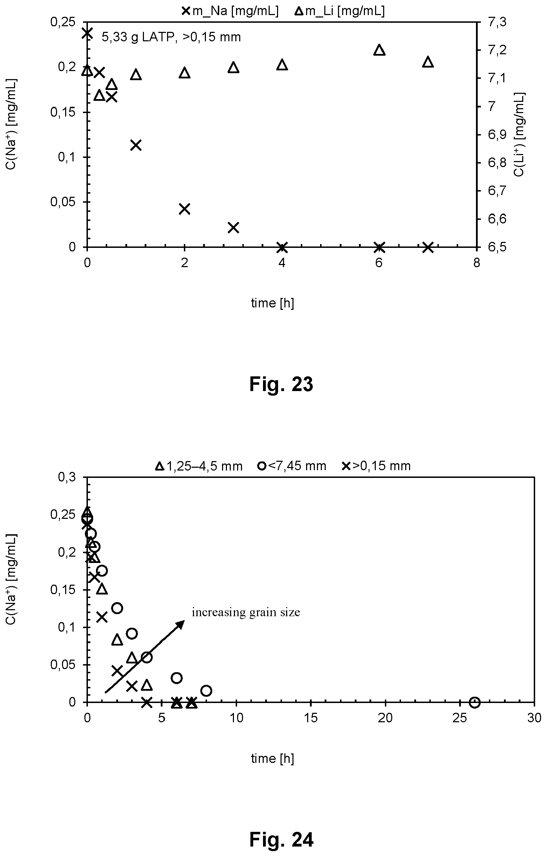

The experimental row on LATP grain size a-c revealed that a small grain size leads to a faster absorption (Fig. 22 - 23, overlay in Fig. 24). The absorption with LATP material (c) was completed after 6 h, whereas the absorption with LATP material (a) was completed after 4 h. This result can be explained again by the surface area. Roughly, the time of the absolute sodium absorption required 4-5-fold of the half-absorption time.

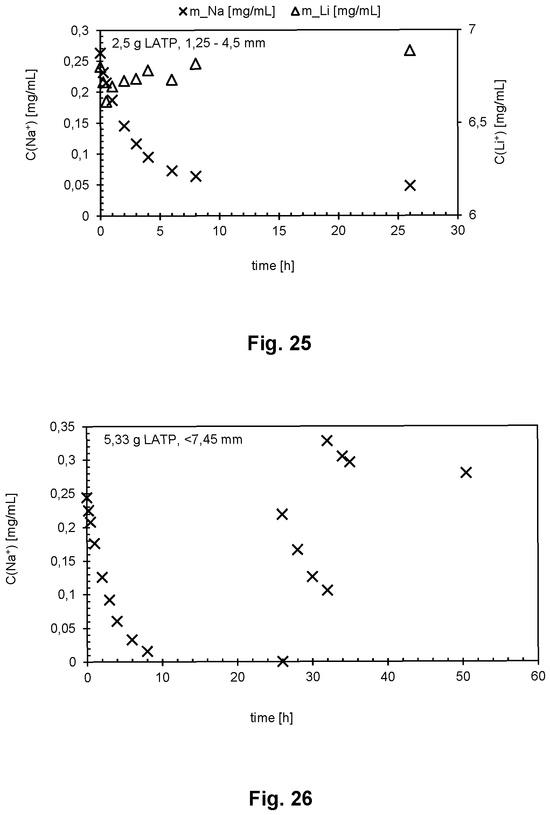

The Na+ absorption capacity was determined for the materials using smaller amounts of LATP material (Fig. 25). For the medium-sized grains, a final concentration of sodium of 0.22 g/mL was reached corresponding to an absorption capacity of 52 mg Na⁺/g LATP (a). The value is in accordance with previous results.

The capacity of the large-sized grains (LATP c) was determined accordingly. It was slightly lower with 44 mg Na⁺/g LATP (c) (Fig. 26 - 27) as explained by a lower surface area.

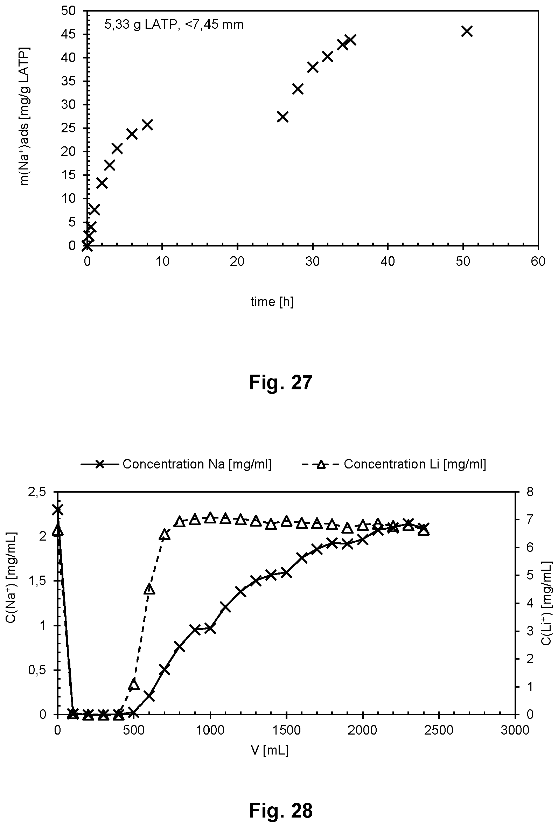

The results were again compared with the ion-exchange resin Lewatit MonoPlus S108h from Fa. LANXESS. The proton loaded Lewatit resin (300 g) yielded a sodium specific capacity of 8.9 mg Na/g Lewatit, which is in accordance with the value from batch experiments (Fig. 28). It is apparent that the onset of the lithium and sodium elution come close together meaning that the separation of such is not very efficient.

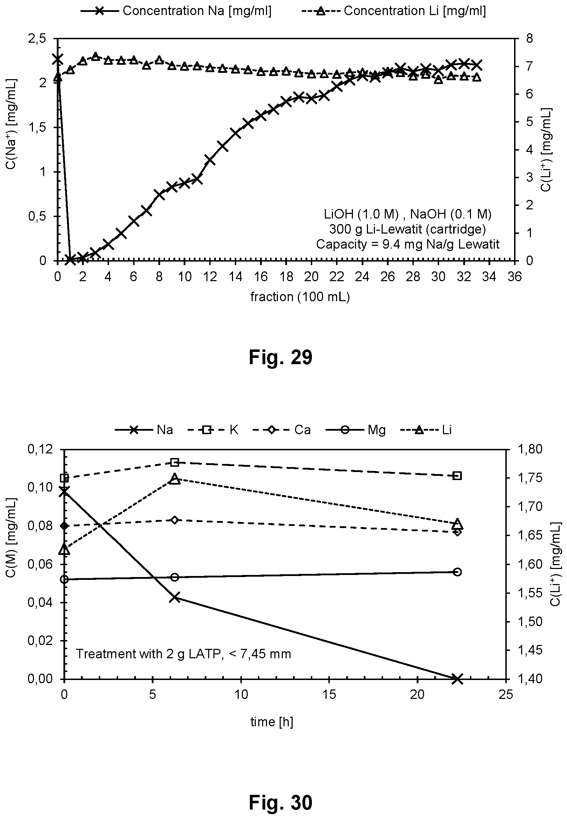

Lithium-loaded Lewatit resin (300 g) yielded a slightly improved sodium specific capacity of 9.4 mg Na/g Lewatit, but the onset of elution is in the same time range as the experiment with H-Lewatit (Fig. 29).

### Example 3: Inverse lithium extraction process

The sequential purification of lithium brines was envisioned by application of our developed Na+ absorption material. The brine was prepared by dissolution of LiCI, NaOH, KCI, CaCl2, and MgSO₄ (composition according to IC analysis: 1.7 mg/mL Li; 0.11 mg/mL Na (110 ppm); 0.12 mg/mL K; 0.1 mg/mL Ca; 0.1 mg/mL Mg). The composition is comparable to brines obtained from Li-ion battery recycling. In a first experiment, the Li brine was treated with the large-sized LATP (c) material (Fig. 30). The progress of the Na absorption was monitored by IC analysis and was compared to a reference measurement at the beginning. The sodium content decreased after 22 h to trace amounts, while the content of all other metal ions remained constant.

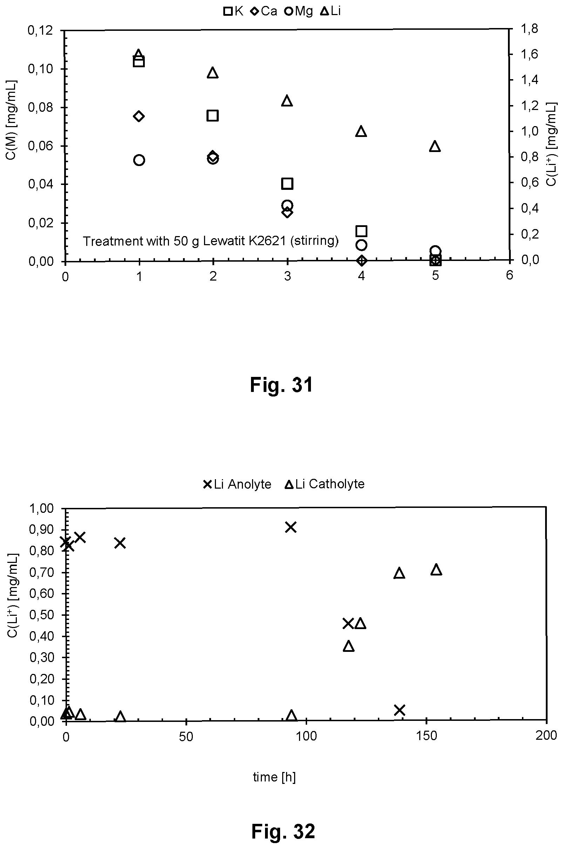

The sodium-free solution was then treated with the H-loaded ion-exchange resin Lewatit 2621 from Fa. LANXESS. The treatment was performed in several steps using 10 g of material each (20 g of material in step 4). The solution was stirred for several seconds above the ion-exchange material and was then separated off. The result is depicted in Figure 31. All cations except Li⁺ were removed to trace amounts. However, with increasing step count the Li⁺ concentration decreased by half.

The treated solution was subjected to electrodialysis. It was performed in a two-chamber electrolysis cell divided by Nafion^{®} N424 at a potential of 12 V. After an initiation time due to low conductivity, the electrolysis accelerated and the Li+ was completely transferred to the catholyte within 60 h (Fig.32). The initial concentration of the anolyte was not reached due to the transfer of Li⁺ in a hydrate shell, which diluted the catholyte. The result is comparable to a reference electrodialysis with pure LiCI in similar concentration (not depicted).

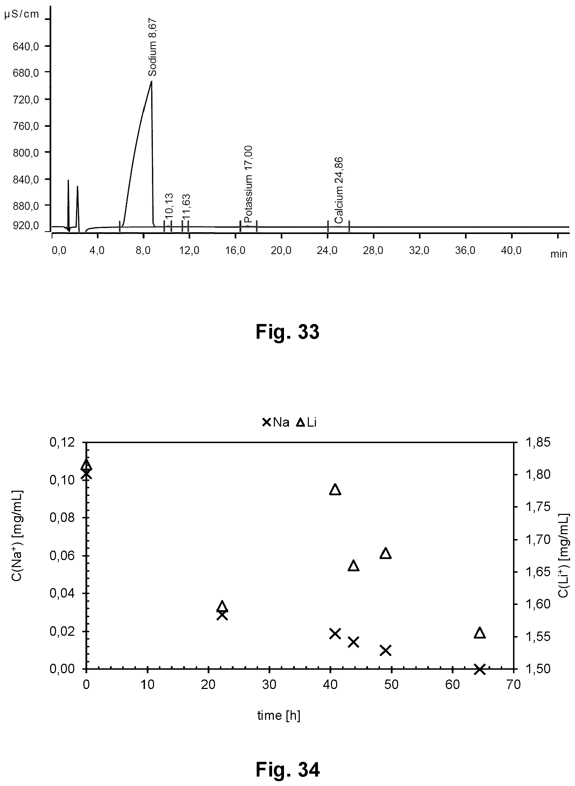

The composition after the electrodialysis was Li⁺ (0.382 mg/mL), Na⁺ (0.001 mg/mL), K⁺ (0.001 mg/mL), Ca²⁺ (0.000 mg/mL), Mg²⁺ (0.000 mg/mL) proofing the high purity of 99.52% Li⁺ and 0.48% Na⁺ and K⁺ (Fig. 33).

A second and third inverse extraction experiment was carried out with a different ion-exchange resin, i.e. Lewatit MonoPlus S108H from Fa. LANXESS. In the second experiment, the solution of various metal cations was treated with LATP material first upon which full Na⁺ absorption was reached. The absorption of small amounts of Li⁺ and Ca²⁺ was observed (Fig. 34).

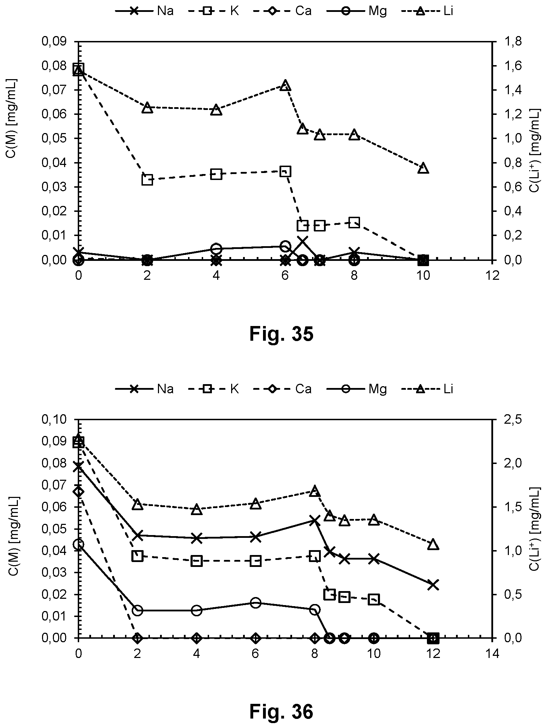

The sodium-free solution was then treated with in a cartridge, which was operated in cycling mode. Performed were three subsequent runs with 20 g Lewatit material for 2 h each (in total 60 g, 6 h). K⁺, Ca²⁺, Mg²⁺ were completely adsorbed. Observed was an increasing affinity from K⁺ to Ca²⁺ to Mg²⁺ and a partial absorption of Li+ by excessive Lewatit material (Fig. 35).

The third inverse extraction experiment was carried out in accordance with the previous experiment, but in an exchanged order of treatments. The solution of various metal cations was first treated with Lewatit followed by treatment with LATP material. Again, sodium and all other non-lithium metal cations were removed to traces amounts (Fig. 36).

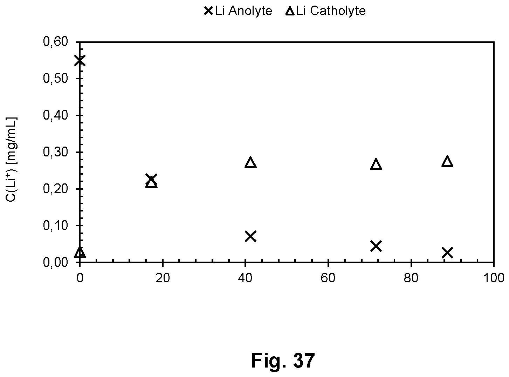

The lithium cation was then further purified by electrodialysis using Nation^{®} N424 as a cation exchange membrane. Like in previous electrodialysis experiments, the Li+ was transferred to the catholyte chamber obtaining high purity lithium hydroxide (Fig. 37).

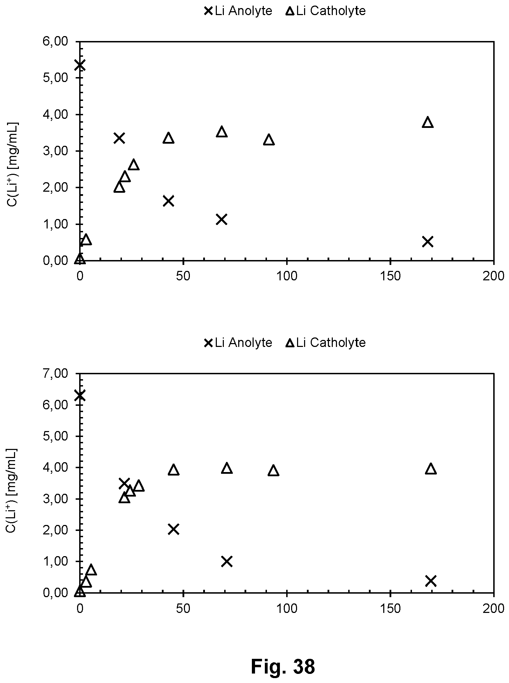

The sodium cation removal by LATP was applied to real industrial Li₂SO₄ and LiCI containing solutions [from Fa. Albemarle] to increase their purity. Sodium cations were found to be fully removed after the treatment with LATP granules. The sulfate or the chloride anion was exchanged to hydroxide by electrodialysis, respectively. The electrodialysis of the Li₂SO₄ solution from Albemarle is depicted in the bottom of Fig. 38. The electrodialysis of the LiCI solution from Albemarle is depicted on top of Fig. 38.

Finally, the sodium absorption mechanism at the CMOC material was investigated. Interestingly, the concentration of Li⁺ increased not in the extend of Na⁺ absorption, which contradicts an exchange mechanism.

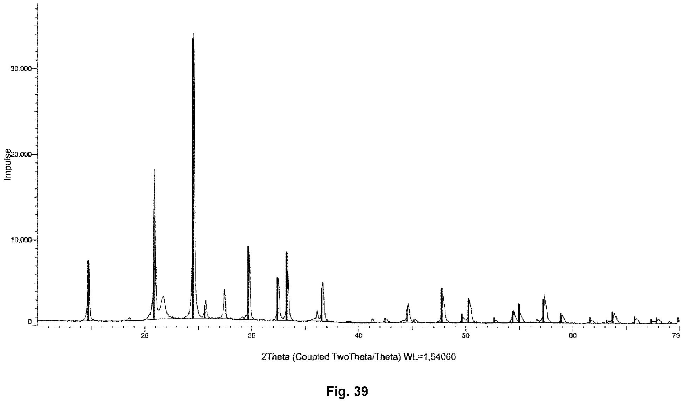

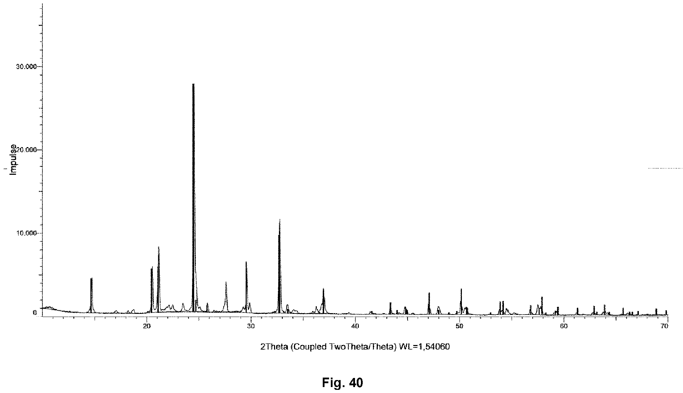

XRD analysis of the CMOC sample before (Fig. 39) and after absorption (Fig. 40) revealed the formation of a sodium phase as indicated by the formation of a doublet at 21°, and by phase shifts at 30°, 33°, 37°, and 47°, amongst others. The spectra are in accordance with database.

### Conclusio

The invention allows the specific, safe, simple, and complete absorption of sodium from aqueous media using a variety of calcinated composite ceramic materials. The absorption was found by coincidence and is achieved by mixing, suspending, or any kind of contacting of the CMOC material with the media. The separation of the insoluble CMOC material is conducted by filtration, decantation, or any other method known by those skilled in the art. Costly and energy-intensive methods are herewith avoided, such as chromatography.

## Claims

1. Method for absorption of sodium cations (Na⁺) from a fluid medium comprising sodium cations (Na⁺) and at least one foreign cation selected from the group consisting of cations of the following elements: Li, K, Mg, Ca, wherein the medium is contacted with a solid absorption material, **characterized in that** said solid absorption material comprises an inorganic compound of the following stoichiometry (LAMP):
Li_{1+x+y+z}AlₓM₂₋ₓP_{3-y}O₁₂
where 0 ≤ x ≤ 0.6 and 0 ≤ y ≤ 0.4 and 0 ≤ z ≤ 0.1,
and where M is at least one metal selected from the group consisting of Ti, Si, Ge.

2. Method according to claim 1, performed in an electrical field having a potential ranging from 0 Volt to 0.1 Volt.

3. Method according to claim 1 or 2, wherein the solid absorption material is of particulate form.

4. Method according to at least one of claims 1 to 3, wherein the medium is an aqueous liquid.

5. Method according to claims 3 and 4, wherein the particular absorption material is provided as a bed and the bed is flooded with the aqueous liquid medium.

6. Method according to claim 4 or 5, wherein the temperature *T* of the aqueous liquid medium is between 10°C and 50°C or between 20°C and 30°C and wherein the *pH* value measured with a glass electrode at the temperature *T* is between 4 and 13 or between 5 and 12.

7. Method according to at least one of claims 1 to 6, wherein lithium cations (Li⁺) are released from said inorganic material.

8. Method according to at least one of claims 1 to 7, wherein M is Ti or M is a combination of Ti and Si.

9. Method according to claim 8, wherein the inorganic material is a compound of the following stoichiometry (LATP):
Li_{1+x+z}AlₓTi₂₋ₓ(PO₄)₃
where 0.1 ≤ x ≤ 0.3 and 0 ≤ z ≤ 0.1 or where x = 0.3 and z=0 or where x = 0.3 and z=0.1

10. Method according to claim 8, wherein the inorganic material is a compound of the following stoichiometry (LATSP):
Li_{1+x+y}AlₓTi₂₋ₓSi_{y}P_{3-y}O₁₂
where 0.1 ≤ x ≤ 0.6 and 0.15 ≤ y ≤ 0.4 or where x=0.6 and y=0.15.

11. Method according to at least one of claims 1 to 7, wherein M is Ge or M is a combination of Ge and Ti.

12. Method according to claim 11, wherein the inorganic material is a compound of the following stoichiometry (LAGP):
Li₁₊ₓAlₓGe₂₋ₓ(PO₄)₃
where: x = 0 or x = 0.2 or x = 0.4 or x = 0.5.

13. Method according to claim 11, wherein the inorganic material is a compound of the following stoichiometry (LAGTP):
Li₁₊ₓAlₓGe_{y}Ti_{2-x-y}(PO₄)₃
where 0 ≤ x ≤ 0.5 and where 0.1 ≤ y ≤ 0.3 or where x=0.45 and y=0.2.

14. Method according to any of claims 8 to 13, wherein the inorganic material is obtained by a method comprising at least one step of calcination.

15. Method according to any of claims 1 to 14, the foreign cation is selected from the group consisting of Li⁺, K⁺, Mg²⁺, Ca²⁺
